# EUROPEAN PATENT APPLICATION

(11) **EP 4 456 667 A1**
(43) Date of publication of application: **30.10.2024**
(21) Application number: 24169867.9
(22) Date of filing: 12.04.2024
(51) Int. Cl.: H05B 6/06, H05B 6/10

(54) **USE OF MONOLITHIC WIRELESS TRANSMITTER WITH SWITCHED CAPACITOR CONVERTER TO DESIGN HEATER FOR E-CIGARETTE**

(30) Priority: 28.04.2023 US 202318140749
(71) Applicant: STMicroelectronics International N.V., 1228 Plan-les-Ouates, Geneva (CH)
(72) Inventor: LEONG, Foo Leng, Singapore 567958 (SG); LI, Yanlei, Beijing 100123 (CN); YANG, Wanli, Beijing 102209 (CN)
(74) Representative: Buzzi, Notaro & Antonielli d'Oulx S.p.A.

(57) **Abstract**

Disclosed herein is an electronic device (10) including a switched capacitor circuit (102) generating a boosted voltage (Vboost) from a battery voltage (Vbatt) and a monolithic transmitter (103) integrated within a single integrated circuit substrate (103). The monolithic transmitter includes a bridge (104) powered between the boosted voltage and a reference voltage and is operated based upon bridge control signals (HS_AC1, LS_AC1, HS_AC2, LS_AC2) generated by a digital core (105) within the monolithic transmitter. A tank capacitor (Ctank) and a coil (112) are series connected between output nodes of the bridge. During operation, the monolithic transmitter causes generation of a time-varying magnetic field about the coil, in turn inducing eddy currents in a workpiece (1122) disposed within the time-varying magnetic field to thereby heat the workpiece.

## Description

### Technical Field

This disclosure relates to electronic cigarettes and, more particularly, to an electronic cigarette utilizing an induction heating system driven by a monolithic wireless transmitter.

### Background

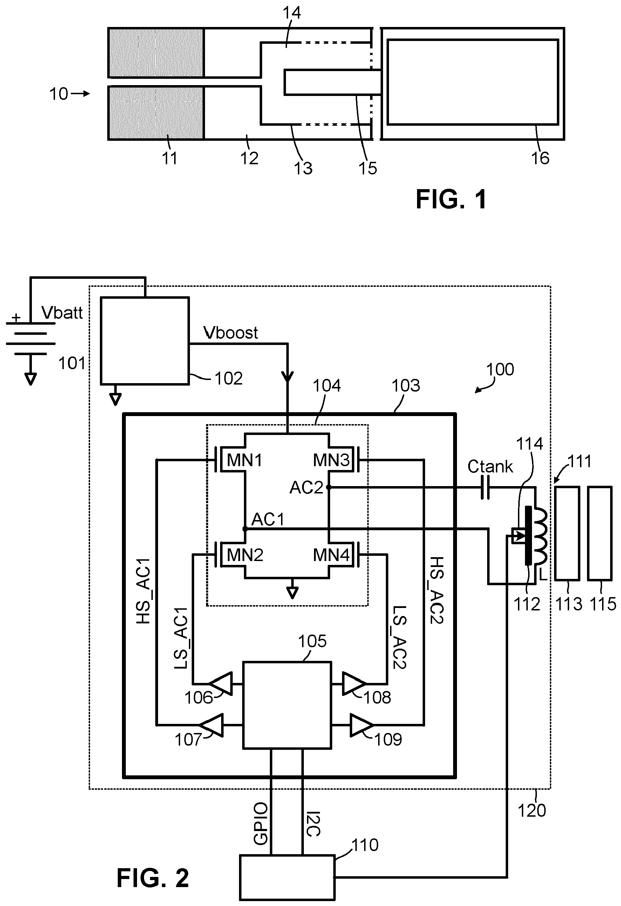

Electronic cigarettes, also known as e-cigarettes, vaping devices, or vapes, have gained popularity as an alternative to traditional cigarettes. A conventional example of an e-cigarette 10 is illustrated in FIG. 1. The e-cigarette 10 functions by heating a specialized liquid, commonly referred to as e-liquid or vape juice, which generates an aerosol or vapor that the user inhales through the mouthpiece 11. The e-liquid typically contains a mixture of propylene glycol, vegetable glycerin, flavorings, and nicotine, catering to various user preferences and allowing for customizable nicotine concentrations. This liquid is stored in a refillable cartridge or tank 12 within the e-cigarette 10.

The process of heating the e-liquid is activated either by pressing an activation button or by the user inhaling through the mouthpiece 11, depending on the device's specific activation mechanism. This creates a negative pressure at the mouthpiece 11, drawing air into an atomizer 13 within the tank 12 through holes and passages connecting the interior of the atomizer to the exterior of the e-cigarette 10. The negative pressure also draws liquid from the tank 12 into the atomizer 13 through holes connecting the tank 12 to the atomizer 13. The liquid is drawn into wicking material 14, often made of cotton or other absorbent materials, surrounding a heater 15 within the atomizer 13. A heater 15 is formed by a copper wire coil wound on a hollow plastic cylinder and a metal workpiece positioned within the plastic cylinder. The metal workpiece itself is a hollow cylinder formed of materials such as nichrome, stainless steel, or other metal materials. In operation, a time varying current is passed through the copper coil, in turn inducing eddy currents within the metal work piece and heating the metal workpiece. The heater 15 is powered by a battery 16 and heats or "vaporizes" the liquid, which in turn is inhaled by the user as the user inhales the air drawn into the atomizer through the holes and passages connecting the interior of the atomizer to the exterior of the e-cigarette 10.

Although numerous e-cigarette designs are available on the market and favored by consumers, there is still room for improvement, particularly in the reduction of power consumption. As a result, the development of e-cigarette designs that incorporate simple, cost-effective, energy-efficient, compact, and discreet heating elements is desirable.

### Summary

The invention is defined by the appended claims. Specifically, according to one or more embodiments, the above objective is achieved by means of an electronic device and a corresponding electronic cigarette. The claims are an integral part of the technical teaching of the disclosure provided herein.

Disclosed herein is an electronic device that includes a voltage boosting circuit designed to generate a boosted voltage from a battery voltage. This device also features a monolithic transmitter integrated within a single integrated circuit substrate. In various embodiments, the monolithic transmitter contains a bridge powered between the boosted voltage and a reference voltage, with its operation based on bridge control signals generated by a digital core within the transmitter. A tank capacitor and a coil are series-connected between output nodes of the bridge, as well as a workpiece. During operation, the monolithic transmitter prompts the generation of a time-varying magnetic field around the coil, subsequently inducing eddy currents in the workpiece that heat it up.

In various embodiments, the voltage boosting circuit in this electronic device has a switched capacitor circuit that produces the boosted voltage from the battery voltage by charging capacitors in parallel during a charging phase and reconnecting them in series during a discharging phase. The device also features a microcontroller configured to generate and send core control signals to the digital core to adjust the bridge's operation, in turn modifying the power transmitted to the workpiece.

In various embodiments, the core control signals can adjust the bridge's operation in various ways, such as changing the frequency of the bridge control signals to alter the switching frequency of the bridge, altering the duty cycle of the bridge control signals to change the duty cycle of the bridge, or performing pulse width modulation on the bridge control signals to carry out pulse width modulation on the bridge.

In various embodiments, the electronic device may also include a temperature sensor designed to sense the workpiece's temperature, with the microcontroller modifying the generation of core control signals based on the output from the temperature sensor. The core control signals can be sent by the microcontroller to the digital core through a general-purpose input/output input or an I2C bus.

In various embodiments, the microcontroller is set up to prompt the digital core to adjust the bridge's operation, transmitting a first amount of power during an initial heating phase and a second, lower amount of power during a temperature maintenance phase.

In various embodiments, an electronic cigarette includes a voltage boosting circuit designed to generate a boosted voltage from a battery voltage and a monolithic transmitter integrated within a single integrated circuit substrate. The transmitter comprises a bridge powered between the boosted voltage and a reference voltage, with its operation based on bridge control signals generated by a digital core within the transmitter. A tank capacitor and a coil are series-connected between output nodes of the bridge.

In various embodiments, the electronic cigarette also features an atomizer with a workpiece and wicking material in close proximity, and the atomizer is in fluid communication with a mouthpiece. Additionally, a tank is in fluid communication with the wicking material and is configured to contain e-liquid. During operation, the monolithic transmitter prompts the generation of a time-varying magnetic field around the coil, inducing eddy currents in the workpiece that heat it up. A microcontroller is designed to generate and send core control signals to the digital core, controlling the bridge's operation and the power transmitted to the workpiece. Negative pressure applied to the mouthpiece during operation causes the e-liquid to be drawn from the tank onto the wicking material, with the heated workpiece vaporizing the e-liquid.

In this electronic cigarette, the voltage boosting circuit may include a switched capacitor circuit that produces the boosted voltage from the battery voltage by charging capacitors in parallel during a charging phase and reconnecting them in series during a discharging phase. The core control signals can adjust the bridge's operation in various ways, such as changing the frequency of the bridge control signals to alter the switching frequency of the bridge, altering the duty cycle of the bridge control signals to change the duty cycle of the bridge, or performing pulse width modulation on the bridge control signals to carry out pulse width modulation on the bridge.

In various embodiments, the electronic cigarette may also feature a temperature sensor designed to sense the workpiece's temperature, with the microcontroller modifying the generation of core control signals based on the output from the temperature sensor. The core control signals can be sent by the microcontroller to the digital core through a general-purpose input/output input or an I2C bus.

In various embodiments, the microcontroller is set up to prompt the digital core to adjust the bridge's operation, transmitting a first amount of power during an initial heating phase and a second, lower amount of power during a temperature maintenance phase.

### Brief Description of the Drawings

For a better understanding of the embodiments, reference will now be made by way of example only to the accompanying figures in which:
FIG. 1 is a diagrammatical representation of a prior art e-cigarette.
FIG. 2 is a schematic diagram of an e-cigarette disclosed herein.

### Detailed Description

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its broadest sense, that is as meaning "and/or" unless the content clearly dictates otherwise.

Note that in the following description, any resistor or resistance mentioned is a discrete device, unless stated otherwise, and is not simply an electrical lead between two points. Therefore, any resistor or resistance connected between two points has a higher resistance than a lead between those two points, and such resistor or resistance cannot be interpreted as a lead. Similarly, any capacitor or capacitance mentioned is a discrete device, unless stated otherwise, and is not a parasitic element, unless stated otherwise. Additionally, any inductor or inductance mentioned is a discrete device, unless stated otherwise, and is not a parasitic element, unless stated otherwise.

Now described with reference to FIG. 2 is a design for an e-cigarette 100 including a heater 120 that heats e-liquid drawn from a tank 115 onto wicking material 113 to thereby vaporize the e-liquid. As will be described below, the heater 120 includes a monolithic transmitter 103 powered by a switched capacitor circuit 102 and used to drive a coil L with a time-varying current to in turn induce eddy currents in a metal workpiece 112 to generate heat.

The term "monolithic" in the context of the monolithic transmitter 103 refers to the integration of the components and circuitry for a transmitter within a single semiconductor device, often referred to as an integrated circuit (IC) or chip. Designed and fabricated using CMOS (Complementary Metal-Oxide-Semiconductor) technology, the monolithic transmitter 103 combines various components, such as transistors, resistors, capacitors, and other passive and active elements, onto a single piece of semiconductor material or chip. This high level of integration contributes to the miniaturization, enhanced reliability, and overall efficiency of the e-cigarette system.

In the embodiment considered, the monolithic transmitter 103 is powered by a boosted voltage Vboost generated by a switched capacitor circuit 102 (described in greater detail below) from a battery voltage Vbatt. The monolithic transmitter 103 includes, on-chip, a full-bridge 104 powered between the boosted voltage Vboost and ground, with the control signals to the full-bridge 104 being provided by a digital core 105.

In the embodiment considered, the full-bridge 104 includes: n-channel transistor MN1 having its drain connected to an input node to receive the boosted voltage Vboost, its source connected to node AC1, and its gate driven by high-side control signal HS_AC1; n-channel transistor MN2 having its drain connected to node AC1, its source connected to ground, and its gate driven by low-side control signal LS_AC1; n-channel transistor MN3 having its drain connected to the input node to receive the boosted voltage Vboost, its source connected to node AC2, and its gate driven by high-side control signal HS_AC2; and n-channel transistor MN4 having its drain connected to node AC2, its source connected to ground, and its gate driven by low-side control signal LS_AC2.

In the embodiment considered, a tank capacitor Ctank and coil L are series connected between nodes AC1 and AC2. The metal workpiece 112, which is part of an atomizer 111, provides heat during operation for atomizing the e-liquid drawn from the tank 115 onto wicking 113 within the atomizer 111 during operation.

The arrangement of the coil L and metal workpiece 112 are as described above - the coil L is formed by copper wire wound on a hollow plastic cylinder, while the metal workpiece 112 is a hollow metal cylinder formed of materials such as nichrome, stainless steel, or other metal materials and positioned inside the plastic cylinder of the coil L.

In the embodiment considered, the high-side control signals HS_AC1, HS_AC2 and low-side control signals LS_AC1, LS_AC2 are generated from pre-drive signals produced by the digital core 105 and subsequently fed to drivers 107, 109 and 106, 108. These drivers serve as intermediary circuitry that amplifies and conditions the pre-drive signals to ensure proper switching of the transistors in the full-bridge 104.

In the embodiment considered, the digital core 105, acting as the central processing unit within the monolithic transmitter 103, generates these pre-drive signals based on input received from an external microcontroller 110. The microcontroller 110 is a programmable device responsible for managing overall e-cigarette operation, including user input (e.g., user activation) and feedback from a temperature sensor 114 placed adjacent to the metal workpiece 112.

In addition to processing temperature data, the microcontroller 110 may also be responsible for handling other inputs, such as airflow detection, battery level monitoring, and safety features like short circuit protection. Based on these inputs and its programmed algorithm, the microcontroller 110 determines the appropriate control signals for the digital core 105, which in turn adjusts the operation of the full-bridge 104 to achieve the desired heating performance and maintain optimal e-cigarette functionality.

In operation, under the control of the microcontroller 110, the digital core 105 manages the generation of high-side control signals HS_AC1, HS_AC2 and low-side control signals LS AC1, LS_AC2. These control signals regulate the switching of the transistors MN1-MN4 in the full-bridge 104, causing it to drive the tank capacitor Ctank and coil L with a high-frequency square wave. As a result, an alternating current (AC) flows through the coil L, creating a rapidly oscillating magnetic field.

This time-varying magnetic field surrounds the coil L and has the same frequency as the AC flowing through the coil. Since the metal workpiece 112 is positioned such that it will be within the magnetic field, it experiences eddy currents induced by the changing magnetic field. These eddy currents create resistive losses within the metal workpiece 112, causing it to heat up and serve to provide the vaporization heat for the e-cigarette 100. Stated simply, the operation of the monolithic transmitter 103 heats the metal workpiece 112 via induction.

In various embodiments, the operating frequency and duty cycle of the high-side control signals HS_AC1, HS_AC2 and low-side control signals LS_AC1, LS_AC2 can be fine-tuned by the digital core 105 under the guidance of the microcontroller 110. This allows for precise control over the output power delivered to the metal workpiece 112, and ultimately, the temperature at which it operates. The microcontroller 110 can make these adjustments based on factors such as user preferences, feedback from the temperature sensor 114, and other operational parameters like airflow and battery life.

The metal workpiece 112 requires different power levels for the initial heating phase and the temperature maintenance phase. For example, suppose the workpiece temperature needs to rise from 25°C to 250°C and then maintain at 250°C for 4 minutes. During the initial heating phase, the monolithic transmitter 103 outputs 20W to rapidly increase the temperature of the metal workpiece 112. However, once the workpiece reaches the target temperature of 250°C, the output power of the monolithic transmitter 103 can be reduced to 10W, which is sufficient to maintain the temperature at 250°C without consuming excessive energy.

In the embodiment considered, to adjust the output power of the monolithic transmitter 103, the digital core 105 dynamically modifies the switching frequency or duty cycle of the full-bridge 104 based on commands received from the microcontroller 110 over an I2C (Inter-Integrated Circuit) communication bus. This approach enables the system to react to changes in operating conditions, user preferences, and other factors that may impact the vaping experience.

As an alternative method for adjusting the output power, the microcontroller 110 can use a single general-purpose input/output (GPIO) pin of the digital core 105 to toggle the monolithic transmitter 103 on and off repeatedly. This method, known as pulse width modulation (PWM), allows the microcontroller to control the effective output power of the monolithic transmitter 103 by varying the duty cycle of the enabling signal. This provides another means for achieving precise control over the workpiece's temperature and power consumption while adapting to changing conditions during use.

In the embodiment considered, as previously mentioned, the monolithic transmitter 103 is powered by a boosted voltage Vboost generated by the switched capacitor circuit 102. This switched capacitor circuit 102 eliminates the need for a space-consuming inductor and functions by charging capacitors in parallel during a charging phase, where they accumulate charge from an input voltage source (in this case, the battery voltage Vbatt). In the following discharging phase, the capacitors are reconnected in series, causing their voltage contributions to be combined, effectively doubling the input voltage to produce the boosted voltage Vboost. This charging and discharging process is typically managed by switches that are driven by a high-frequency clock signal.

The voltage boosting enables the metal workpiece 112 to achieve enhanced heating performance. For instance, if the battery voltage Vbatt is 4V, the maximum output power of the monolithic transmitter 103 would be limited to 12W, causing the metal workpiece 112 to take twenty seconds or more to attain the desired operating temperature. However, if the switched capacitor circuit 102 doubles Vbatt, resulting in an 8V Vboost, the monolithic transmitter's maximum output power could exceed 20W, allowing the metal workpiece 112 to reach the desired operating temperature in under five seconds. This improvement not only enhances the user experience but also bolsters the overall efficiency of the system.

Additional benefits provided by the described e-cigarette 100 include the simplification of its design through the use of the monolithic transmitter 103 to heat the metal workpiece 112 via lower power consumption induction, as opposed to bulkier, high power consumption resistive heating solutions. Moreover, if the GPIO input of the digital core 105 is employed instead of an SPI interface for communication with the microcontroller 110, further space and complexity savings can be achieved.

Furthermore, if the monolithic transmitter 103 has Q-factor measurement functionality, this feature can be utilized to estimate the resonance frequency of the LC circuit formed by the combination of the tank capacitor Ctank and the inductor L. This estimated resonance frequency may then be employed to select the switching frequency of the full-bridge 104. It is worth noting that this estimated resonance frequency may be more accurate than an assumed resonance frequency due to production variances in the capacitance of the tank capacitor Ctank and the inductance of the coil L, or because these values change as the components age. This, in turn, enhances efficiency, further reducing power consumption.

Example embodiments of the present invention are summarized here. Other embodiments can also be understood from the entirety of the specification and the claims filed herein.

Example 1. An electronic device, comprising a voltage boosting circuit configured to generate a boosted voltage from a battery voltage, a monolithic transmitter integrated within a single integrated circuit substrate and comprising a bridge powered between the boosted voltage and a reference voltage, the bridge operated based upon bridge control signals generated by a digital core within the monolithic transmitter; a tank capacitor and a coil series connected between output nodes of the bridge; and a workpiece, wherein, during operation, the monolithic transmitter causes generation of a time-varying magnetic field about the coil, in turn inducing eddy currents in the workpiece that heat the workpiece.

Example 2. The electronic device of Example 1, wherein the voltage boosting circuit comprises a switched capacitor circuit that generates the boosted voltage from the battery voltage by charging capacitors in parallel during a charging phase and reconnecting them in series during a discharging phase.

Example 3. The electronic device of Example 1, further comprising: a microcontroller configured to generate and send core control signals to the digital core to cause the digital core to adjust operation of the bridge, in turn adjusting power transmitted to the workpiece.

Example 4. The electronic device of Example 3, wherein the core control signals cause the digital core to adjust operation of the bridge by causing the digital core to change a frequency of the bridge control signals to thereby change a switching frequency of the bridge.

Example 5. The electronic device of Example 3, wherein the core control signals cause the digital core to adjust operation of the bridge by causing the digital core to change a duty cycle of the bridge control signals to thereby change a duty cycle of the bridge.

Example 6. The electronic device of Example 3, wherein the core control signals cause the digital core to adjust operation of the bridge by causing the digital core to perform pulse width modulation on the bridge control signals to thereby perform pulse width modulation on the bridge.

Example 7. The electronic device of Example 3, further comprising a temperature sensor configured to sense a temperature of the workpiece; and wherein the microcontroller modifies generation of the core control signals based upon output from the temperature sensor.

Example 8. The electronic device of Example 3, wherein the core control signals are sent by the microcontroller to the digital core via a general-purpose input/output input of the digital core.

Example 9. The electronic device of Example 3, wherein the core control signals are sent by the microcontroller to the digital core via an I2C bus.

Example 10. The electronic device of Example 3, wherein the microcontroller is configured to cause the digital core to adjust the operation of the bridge to transmit a first amount of power during an initial heating phase but transmit a second amount of power during a temperature maintenance phase, the second amount of power being less than the first amount of power.

Example 11. An electronic cigarette (10), comprising a voltage boosting circuit configured to generate a boosted voltage from a battery voltage, a monolithic transmitter integrated within a single integrated circuit substrate and comprising a bridge powered between the boosted voltage and a reference voltage, the bridge operated based upon bridge control signals generated by a digital core within the monolithic transmitter, a tank capacitor and a coil series connected between output nodes of the bridge, an atomizer including a workpiece and wicking material in proximity to one another, the atomizer being in fluid communication with a mouthpiece, a tank in fluid communication with the wicking material and configured to contain e-liquid, wherein, during operation, the monolithic transmitter causes generation of a time-varying magnetic field about the coil, in turn inducing eddy currents in the workpiece that heat the workpiece, and a microcontroller configured to generate and send core control signals to the digital core to cause the digital core to control operation of the bridge and in turn power transmitted to the workpiece, wherein, during operation, negative pressure applied to the mouthpiece is intended to cause the drawing of the e-liquid from the tank onto the wicking material, and the heating of the workpiece causing vaporization of the e-liquid.

Example 12. The electronic cigarette of Example 11, wherein the voltage boosting circuit comprises a switched capacitor circuit that generates the boosted voltage from the battery voltage by charging capacitors in parallel during a charging phase and reconnecting them in series during a discharging phase.

Example 13. The electronic cigarette of Example 11, wherein the core control signals cause the digital core to adjust operation of the bridge by causing the digital core to change a frequency of the bridge control signals to thereby change a switching frequency of the bridge.

Example 14. The electronic cigarette of Example 11, wherein the core control signals cause the digital core to adjust operation of the bridge by causing the digital core to change a duty cycle of the bridge control signals to thereby change a duty cycle of the bridge.

Example 15. The electronic cigarette of Example 11, wherein the core control signals cause the digital core to adjust operation of the bridge by causing the digital core to perform pulse width modulation on the bridge control signals to thereby perform pulse width modulation on the bridge.

Example 16. The electronic cigarette of Example 11, further comprising a temperature sensor configured to sense a temperature of the workpiece; and wherein the microcontroller modifies generation of the core control signals based upon output from the temperature sensor.

Example 17. The electronic cigarette of Example 11, wherein the core control signals are sent by the microcontroller to the digital core via a general-purpose input/output input of the digital core.

Example 18. The electronic cigarette of Example 11, wherein the core control signals are sent by the microcontroller to the digital core via an I2C bus.

Example 19. The electronic cigarette of claim 11, wherein the microcontroller is configured to cause the digital core to adjust the operation of the bridge to transmit a first amount of power during an initial heating phase but transmit a second amount of power during a temperature maintenance phase, the second amount of power being less than the first amount of power.

Accordingly, the voltage boosting circuit, the monolithic transmitter, the tank capacitor and a coil series and the workpiece of Example 11 to 19 may be implemented with the electronic devices according to Examples 1 to 10.

Finally, it is evident that modifications and variations can be made to what has been described and illustrated herein without departing from the scope of this disclosure.

Although this disclosure has been described with a limited number of embodiments, those skilled in the art, having the benefit of this disclosure, can envision other embodiments that do not deviate from the disclosed scope. Furthermore, skilled persons can envision embodiments that represent various combinations of the embodiments disclosed herein made in various ways.

## Claims

1. An electronic device (10), comprising:
- a voltage boosting circuit (102) configured to generate a boosted voltage (Vboost) from a battery voltage (Vbatt);
- a monolithic transmitter (103) integrated within a single integrated circuit substrate (103) and comprising a bridge (104) powered between the boosted voltage and a reference voltage, the bridge operated based upon bridge control signals (HS_AC1, LS_AC1, HS_AC2, LS_AC2) generated by a digital core (105) within the monolithic transmitter;
- a tank capacitor (Ctank) and a coil (112) series connected between output nodes of the bridge; and
- a workpiece (112);
wherein, during operation, the monolithic transmitter causes generation of a time-varying magnetic field about the coil, in turn inducing eddy currents in the workpiece that heat the workpiece.

2. The electronic device (10) of claim 1, wherein the voltage boosting circuit (102) comprises a switched capacitor circuit that generates the boosted voltage from the battery voltage by charging capacitors in parallel during a charging phase and reconnecting them in series during a discharging phase.

3. The electronic device (10) of claim 1 or claim 2, further comprising: a microcontroller (110) configured to generate and send core control signals to the digital core (105) to cause the digital core to adjust operation of the bridge (104), in turn adjusting power transmitted to the workpiece (115).

4. The electronic device (10) of claim 3, wherein the core control signals cause the digital core (105) to adjust operation of the bridge (104) by causing the digital core to change a frequency of the bridge control signals (HS_AC1, LS_AC1, HS_AC2, LS_AC2) to thereby change a switching frequency of the bridge.

5. The electronic device (10) of claim 3, wherein the core control signals cause the digital core (105) to adjust operation of the bridge (104) by causing the digital core to change a duty cycle of the bridge control signals (HS_AC1, LS_AC1, HS_AC2, LS_AC2) to thereby change a duty cycle of the bridge (104).

6. The electronic device (10) of claim 3, wherein the core control signals cause the digital core (105) to adjust operation of the bridge (104) by causing the digital core to perform pulse width modulation on the bridge control signals (HS_AC1, LS_AC1, HS_AC2, LS_AC2) to thereby perform pulse width modulation on the bridge (104).

7. The electronic device (10) of any of claims 3 to 6, further comprising a temperature sensor (114) configured to sense a temperature of the workpiece (115); and wherein the microcontroller (110) modifies generation of the core control signals based upon output from the temperature sensor.

8. The electronic device (10) of any of claims 3 to 7, wherein the core control signals are sent by the microcontroller (110) to the digital core (105) via a general-purpose input/output input of the digital core.

9. The electronic device (10) of any of claims 3 to 8, wherein the core control signals are sent by the microcontroller (110) to the digital core (105) via an I2C bus.

10. The electronic device (10) of any of claims 3 to 9, wherein the microcontroller (110) is configured to cause the digital core (105) to adjust the operation of the bridge (104) to transmit a first amount of power during an initial heating phase but transmit a second amount of power during a temperature maintenance phase, the second amount of power being less than the first amount of power.

11. An electronic cigarette (10), comprising:
- an electronic device (10) according to any of the previous claims;
- an atomizer (13; 111) including the workpiece (112) of the electronic device (10) and wicking material (113) in proximity to one another, the atomizer being in fluid communication with a mouthpiece (11);
- a tank (12) in fluid communication with the wicking material and configured to contain e-liquid;
- a microcontroller (110) configured to generate and send core control signals to the digital core to cause the digital core to control operation of the bridge and in turn power transmitted to the workpiece;
wherein, during operation, negative pressure applied to the mouthpiece is intended to cause the drawing of the e-liquid from the tank onto the wicking material, and the heating of the workpiece causing vaporization of the e-liquid.

12. The electronic cigarette (10) of claim 11, wherein the voltage boosting circuit (102) comprises a switched capacitor circuit (102) that generates the boosted voltage (Vboost) from the battery voltage (Vbatt) by charging capacitors in parallel during a charging phase and reconnecting them in series during a discharging phase.

13. The electronic cigarette (10) of claim 11, wherein the core control signals cause the digital core to adjust operation of the bridge (104) by causing the digital core to:
- change a frequency of the bridge control signals (HS_AC1, LS_AC1, HS AC2, LS_AC2) to thereby change a switching frequency of the bridge,
- change a duty cycle of the bridge control signals (HS_AC1, LS_AC1, HS_AC2, LS_AC2) to thereby change a duty cycle of the bridge, or
- perform pulse width modulation on the bridge control signals (HS_AC1, LS_AC1, HS_AC2, LS_AC2) to thereby perform pulse width modulation on the bridge.

14. The electronic cigarette (10) of any of claims 11 to 13, further comprising a temperature sensor (114) configured to sense a temperature of the workpiece; and wherein the microcontroller (110) modifies generation of the core control signals based upon output from the temperature sensor.

15. The electronic cigarette (10) of any of claims 11 to 14, wherein the microcontroller (110) is configured to cause the digital core (105) to adjust the operation of the bridge (104) to transmit a first amount of power during an initial heating phase but transmit a second amount of power during a temperature maintenance phase, the second amount of power being less than the first amount of power.
